# FASCICULE DE BREVET EUROPEEN

(11) **EP 3 394 472 B1**
(45) Date de publication et mention de la délivrance du brevet: **18.12.2019**
(21) Numéro de dépôt: 16812766.0
(22) Date de dépôt: 20.12.2016
(51) Int. Cl.: F16D 65/18, B60T 17/22, F16D 55/226, F16D 125/46, F16D 121/24

(54) **CONDUIT ELECTRIQUE ET DE PASSAGE DE FLUIDE POUR CONTROLER UNE ETANCHEITE DANS UN FREIN DE VEHICULE**
ELEKTRISCHER UND FLUIDISCHER DURCHGANGSKANAL ZUR STEUERUNG EINER DICHTUNG IN EINER FAHRZEUGBREMSE
ELECTRIC AND FLUID PASSAGE DUCT FOR CONTROLLING A SEAL IN A VEHICLE BRAKE

(30) Priorité: 22.12.2015 FR 1563067
(43) Date de publication de la demande: 31.10.2018
(73) Titulaire: Foundation Brakes France, 93700 Drancy (FR)
(72) Inventeur: BOURLON, Philippe, 77230 Dammartin en Goële (FR)
(74) Mandataire: Brevalex
(86) Numéro de dépôt international: PCT/EP2016/081924
(87) Numéro de publication internationale: WO 2017/108792

(56) Documents cités:
- JP-A- 2003 042 198
- JP-A- 2004 320 844
- JP-A- 2008 207 640

## Description

### DOMAINE TECHNIQUE

L'invention se rapporte aux freins pour véhicule et au contrôle de l'étanchéité de freins. Elle concerne notamment le contrôle de l'étanchéité entre l'actionneur et le corps d'étrier d'un frein de voiture.

### ÉTAT DE LA TECHNIQUE ANTÉRIEURE

Des étriers de freins comprennent un corps d'étrier et un actionneur électromécanique de frein. Le corps d'étrier renferme un piston.

L'actionneur électromécanique comporte un moteur, un dispositif de transmission et un connecteur électrique pour alimenter électriquement l'actionneur. Le dispositif de transmission est configuré pour déplacer le piston, lorsqu'il est entraîné par le moteur.

L'actionneur et le corps d'étrier sont accouplés l'un à l'autre de manière étanche. Il existe néanmoins un besoin pour contrôler l'étanchéité de l'étrier de frein, avant sa mise en vente ou son installation sur un véhicule.

JP 2008 207640 divulgue un étrier de frein de structure connue.

### EXPOSÉ DE L'INVENTION

A cet égard, l'invention a pour objet un actionneur électromécanique de frein pour véhicule. L'actionneur comprend un moteur, un carter délimitant un espace interne renfermant le moteur, et un connecteur électrique débouchant sur l'extérieur de l'actionneur.

Selon l'invention, l'actionneur comprend un conduit ménagé dans une paroi du carter, dans lequel est situé un conducteur électrique qui relie électriquement le moteur au connecteur électrique, le conduit étant configuré pour laisser circuler du fluide dans un espace délimité par le conducteur électrique et par la paroi du carter, à travers le connecteur électrique et entre le connecteur électrique et l'espace interne.

Le conduit permet de contrôler plus efficacement l'étanchéité de l'actionneur et de l'étrier de frein lorsque l'actionneur est accouplé au corps d'étrier. En particulier, le temps nécessaire au contrôle de l'étanchéité de l'étrier est réduit et le coût de ce contrôle est diminué.

Le conduit qui est créé pour acheminer du courant en direction du moteur est également utilisé pour faire passer du fluide dans l'actionneur, afin de contrôler son étanchéité.

L'invention peut comporter de manière facultative une ou plusieurs des caractéristiques suivantes combinées entre elles ou non.

Avantageusement, le connecteur électrique est configuré pour être raccordé à un connecteur électrique complémentaire, en étant étanche au fluide lorsqu'il est raccordé au connecteur électrique complémentaire.

L'invention porte également sur un étrier de frein comprenant un corps d'étrier, et un actionneur tel que défini ci-dessus, le carter comprenant une surface de montage pour accoupler de manière étanche l'actionneur au corps d'étrier.

Avantageusement, le corps d'étrier est un corps d'étrier flottant.

Avantageusement, l'étrier de frein comprend un Joint entre l'actionneur et le corps d'étrier, le conduit étant configuré pour tester l'étanchéité au fluide entre l'actionneur et le corps d'étrier.

L'invention se rapporte aussi à un procédé de vérification de l'étanchéité d'un étrier de frein tel que défini ci-dessus.

Le procédé de vérification comprend une étape de connexion du conduit à un dispositif de variation de pression, pour faire varier la pression de fluide dans l'étrier. Le fluide est de préférence de l'air.

Avantageusement, le procédé de vérification comprend ensuite une étape de mesure de valeur représentative de pression de fluide au niveau du connecteur électrique et/ou de la surface de montage.

Avantageusement, le procédé de vérification comprend :
une étape de mesure de durée nécessaire pour que la valeur représentative de pression atteigne une valeur de pression déterminée,
une étape de comparaison de la mesure de durée à une durée de référence, et
l'émission d'un signal représentatif d'un défaut d'étanchéité de l'étrier si la valeur absolue de l'écart entre la mesure de durée et la durée de référence excède une valeur seuil.

### BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :
- la figure 1 est une représentation schématique partielle d'un étrier de frein et d'un système de contrôle d'étanchéité, selon un premier mode de réalisation de l'invention ;
- la figure 2 est une représentation schématique partielle de l'étrier de frein, selon le premier mode de réalisation, lorsqu'il est raccordé au circuit électrique du véhicule ;
- la figure 3 illustre un procédé de contrôle d'étanchéité de l'étrier de frein selon le premier mode de réalisation.

Des parties identiques, similaires ou équivalentes des différentes figures portent les mêmes références numériques de façon à faciliter le passage d'une figure à l'autre.

### EXPOSÉ DÉTAILLÉ DE MODES DE RÉALISATION PARTICULIERS

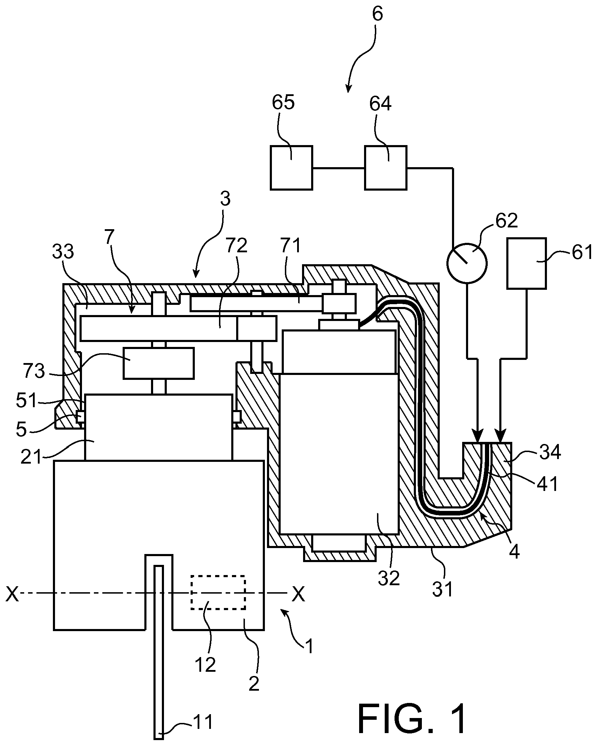

La figure 1 représente un étrier 1 de frein pour véhicule automobile, ainsi qu'un système de contrôle 6 qui est configuré pour contrôler l'étanchéité de l'étrier 1, notamment entre l'actionneur 3 et le corps d'étrier 2.

L'étrier 1 est un étrier de type flottant. Il est conçu pour être utilisé dans un frein à disque 11, de type électromécanique. Ce frein à disque 11 est par exemple un de frein de stationnement configuré pour freiner une roue typiquement, la roue arrière de véhicule. Par ailleurs, l'étrier 1 comporte une activation hydraulique assurant le freinage de service.

L'étrier 1 comporte un corps d'étrier 2 et un actionneur 3 électromécanique de frein.

Le corps d'étrier 2 comporte un carter ou une interface 21 d'entrée qui est utilisé pour solidariser le corps d'étrier 2 à l'actionneur 3.

Le corps d'étrier 2 loge un piston 12 qui est situé, au moins partiellement, dans le prolongement du carter d'entrée 21 le long de la direction longitudinale X-X du corps d'étrier 2. Ce piston 12 est mobile en translation le long de la direction longitudinale X-X du corps d'étrier 2, sous l'effet de l'actionneur 3.

Le corps d'étrier 2 loge également un disque 11 de frein entre deux patins de frein (non représentés). Le disque 11 est situé à l'opposé du carter d'entrée 21 relativement à la direction longitudinale X-X du corps d'étrier 2.

L'étrier 1 est configuré pour que le piston 12 se déplace lors du freinage de la roue du véhicule, en entraînant le rapprochement des patins pour qu'ils enserrent le disque 11.

L'actionneur 3 comprend un carter extérieur 31, un moteur 32, un dispositif de transmission 7 et un connecteur électrique 34.

Le moteur 32 est un moteur électrique configuré pour entraîner le dispositif de transmission 7. Il est par exemple de type à balai.

Le dispositif de transmission 7 comprend un premier train d'engrenages 71 destiné à être entrainé mécaniquement par le moteur 32, un deuxième train d'engrenages 72 destiné à être entraîné par le premier train d'engrenages 71, et un troisième train d'engrenages 73 qui est accouplé au piston 12.

Le dispositif de transmission 7 est conçu pour déplacer le piston 12 en translation le long de l'axe long de l'axe longitudinal X-X du corps d'étrier, sous l'action du moteur 32.

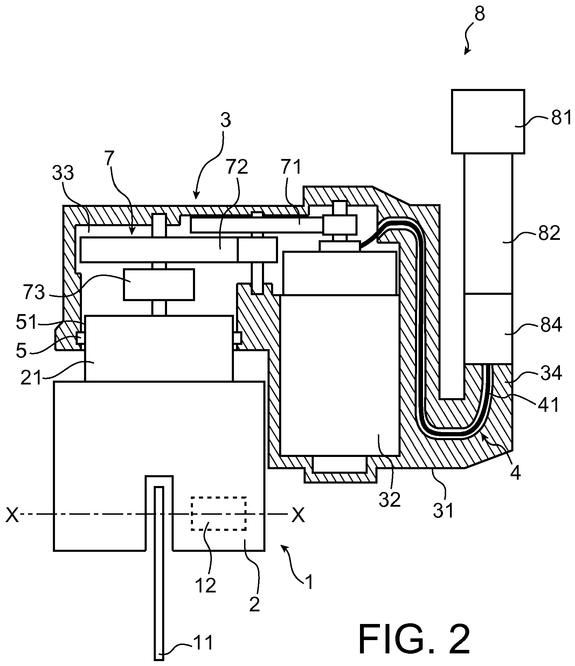

Le connecteur électrique 34 est un connecteur électrique mâle, femelle ou androgyne qui est configuré pour être raccordé électriquement à un connecteur électrique femelle, mâle ou androgyne 84 (figure 2) qui est de forme complémentaire de celle du connecteur électrique par exemple mâle 34.

Le connecteur mâle 34 est configuré pour alimenter électriquement l'actionneur 3, en étant étanche à l'air et à l'eau, lorsqu'il est raccordé au connecteur femelle 84.

Le carter 31 est fabriqué par moulage. Il délimite un espace interne 33 de l'actionneur 3, dans lequel sont logés le moteur 32 et le dispositif de transmission 7.

Le connecteur électrique 34 de l'actionneur 3 est intégré dans le carter 31, lors du moulage du carter 31. Il débouche du carter 31 sur l'extérieur de l'actionneur 3.

Le carter 31 comporte une surface extérieure de montage 51 qui délimite une ouverture destinée à recevoir le carter d'entrée 21 du corps d'étrier 2. L'ouverture débouche dans l'espace interne 33, pour accoupler mécaniquement le dispositif de transmission 7 au piston 12.

Le carter d'entrée 21 est destiné à être fixé de manière étanche à la surface de montage 51, pour accoupler de manière étanche l'actionneur 3 au corps d'étrier 2.

L'ouverture loge un joint 5 d'étanchéité qui est situé entre l'actionneur 3 et le corps d'étrier 2. Le joint 5 est situé contre la surface extérieure de montage 51 d'une part et contre le carter d'entrée 21 du corps d'étrier 2 d'autre part.

Afin d'assurer le bon fonctionnement de l'étrier 1, celui-ci doit être étanche aux liquides. En particulier, il doit être étanche à l'eau, puisque de l'eau serait sinon susceptible de de s'introduire dans l'actionneur 3 et de le détériorer prématurément.

En référence à la figure 2, le connecteur électrique 34 est destiné à alimenter électriquement l'actionneur 3, avec de l'électricité en provenance de la batterie 81 du véhicule. Il est configuré pour alimenter électriquement le moteur 32 par l'intermédiaire d'au moins un câble électrique 41.

Le circuit électrique du véhicule 81 est relié électriquement au connecteur électrique femelle 84 par l'intermédiaire de câbles électriques 82. Le connecteur électrique femelle 84 est configuré pour engager mécaniquement le connecteur mâle 34, en étant relié électriquement au conducteur mâle 34.

En référence à nouveau à la figure 1, le câble électrique 41 est situé à l'intérieur d'un conduit 4 qui est ménagé à l'intérieur du carter 31, au lieu d'être intégré par moulage dans le carter 31. Ce câble électrique 41 s'étend depuis le connecteur 34 jusqu'au moteur 32. Il sert de conducteur électrique pour acheminer du courant depuis le connecteur 34 jusqu'au moteur 32.

Le conduit 4 loge le câble électrique 41 sur toute l'étendue du câble 41. Il prend la forme d'un évidement ménagé dans une paroi du carter 31. Il s'étend depuis le connecteur 34 où il débouche sur l'extérieur de l'actionneur 3, jusqu'au moteur 32 où il débouche dans l'espace interne 33.

Le conduit 4 forme aussi un passage d'écoulement d'un fluide, typiquement de l'air, depuis l'extérieur de l'actionneur 3 jusqu'à la surface de montage 51.

Le conduit 4 de l'actionneur 3 et le système de contrôle d'étanchéité 6 visent à contrôler plus efficacement l'étanchéité de l'étrier de frein 1.

Le système de contrôle d'étanchéité 6 comporte une pompe, un manomètre 62 situé à proximité de la pompe, une unité de traitement informatique 64 reliée à la sortie du manomètre 62, et un dispositif d'alerte 65 relié à la sortie de l'unité de traitement 64.

La pompe joue le rôle d'un dispositif d'injection d'air 61 configuré pour introduire de l'air sous pression dans le conduit 4, à travers le connecteur électrique 34. De manière plus générale, le dispositif d'injection d'air 61 joue le rôle d'un dispositif de variation de pression configuré pour faire varier la pression de fluide dans le conduit 4.

Le manomètre 62 est configuré pour mesurer la pression d'air au niveau du connecteur électrique 34 et pour transmettre un signal représentatif d'une mesure de pression à l'unité de traitement 64.

L'unité de traitement 64 comporte un microprocesseur et une mémoire. Elle est configurée pour traiter le signal représentatif de mesure de pression provenant du manomètre 62, pour transmettre, le cas échéant, un signal représentatif d'un défaut d'étanchéité de l'étrier 1.

Le dispositif d'alerte 65 est configuré pour recevoir un signal représentatif de défaut d'étanchéité de la part de l'unité de traitement 64, et pour transmettre alors une alerte, tactile, sonore et/ou visuelle à un utilisateur pour l'avertir du risque de défaut d'étanchéité de l'étrier 1.

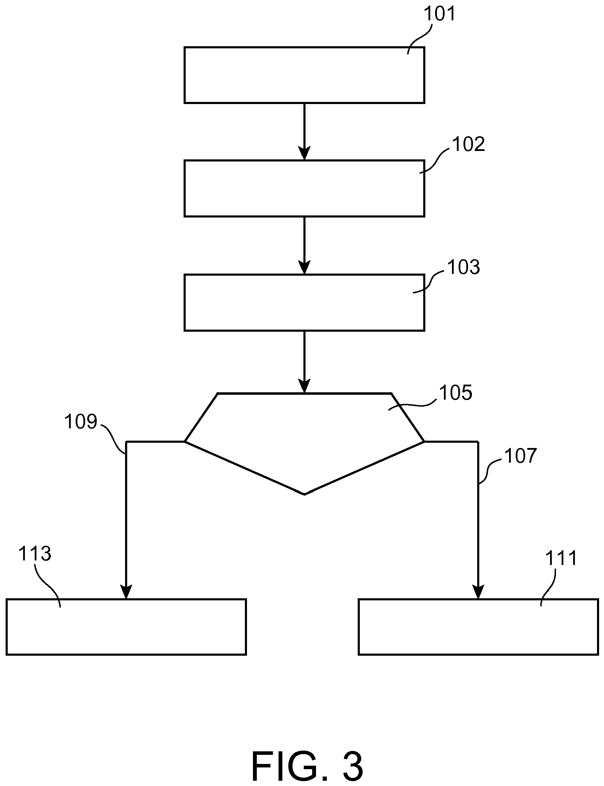

Un procédé de vérification de l'étanchéité de l'étrier 1 à l'aide du conduit 4 et du système de contrôle 6 est illustré en référence à la figure 3.

Tout d'abord, le dispositif d'injection d'air 61 est connecté fluidiquement à l'actionneur 3, à une étape 101, pour injecter de l'air sous pression dans le conduit 4 à travers le connecteur électrique 34.

A une étape 102, le manomètre 62 mesure la pression de l'air dans le conduit 4, lorsque de l'air est en train d'être injecté dans le conduit 4 par le dispositif d'injection 61.

A une étape 103, l'unité de traitement 64 mesure la durée nécessaire pour que la pression mesurée dans le conduit 4 atteigne une valeur de pression déterminée qui est une valeur fixe prédéterminée. Cette durée est par exemple déterminée en référence à l'instant de début d'injection d'air sous pression dans le conduit 4.

A une étape 105, l'unité de traitement 64 compare la mesure de durée nécessaire pour que la pression dans le conduit 4 atteigne la pression déterminée à une durée de référence.

Si l'écart en valeur absolue entre la mesure de durée et la durée de référence excède une valeur seuil, qui est prédéterminée ou rentrée par un utilisateur, le procédé de vérification se poursuit, selon la flèche 107, par le signalement d'un défaut d'étanchéité de l'étrier 1 par l'unité de traitement 64, à l'étape 111.

Si l'écart en valeur absolue entre la mesure de durée et la durée de référence est inférieur à la valeur seuil, le procédé de vérification se poursuit, selon la flèche 109, par un signalement d'absence de défaut d'étanchéité de l'étrier 1 par l'unité de traitement 64, à l'étape 113.

Lorsque l'unité de traitement 64 a émis un signal représentatif de défaut d'étanchéité à l'étape 111, le dispositif d'alerte 65 transmet alors une alerte, tactile, sonore et/ou visuelle à un utilisateur pour l'avertir du risque de défaut d'étanchéité de l'étrier 1.

Lorsque l'unité de traitement 64 a émis un signal représentatif d'absence de défaut d'étanchéité à l'étape 113, le dispositif d'alerte 65 ne transmet pas d'alerte à un utilisateur pour l'avertir du risque de défaut d'étanchéité de l'étrier 1. Le dispositif d'alerte 65 peut également signaler à l'utilisateur l'absence de défaut d'étanchéité détecté par le système de contrôle 6.

Le conduit 4 et le système de contrôle d'étanchéité 6 sont d'autant plus destinés à contrôler l'étanchéité au niveau du joint 5 que les défauts d'étanchéité de l'étrier 1 proviennent essentiellement d'une mauvaise installation du joint 5 entre le carter d'entrée 21 et la surface de montage 51, ou bien d'un défaut de fabrication du joint 5 ou de l'absence du joint 5.

Le conduit 4 et le système de contrôle 6 permettent avantageusement de réaliser des tests d'étanchéité non destructifs.

Le système de contrôle 6 est alors avantageusement utilisé pour contrôler l'étanchéité de chaque étrier 1 fabriqué, notamment entre l'actionneur 3 et le corps d'étrier 2, avant la commercialisation de l'étrier 1.

Bien entendu, diverses modifications peuvent être apportées par l'homme du métier à l'invention qui vient d'être décrite sans sortir du cadre de l'exposé de l'invention.

Dans une variante de réalisation, le procédé de vérification de l'étanchéité de l'étrier 1 comprend la comparaison de la mesure de valeur représentative de pression à une valeur de référence, après qu'une durée déterminé soit écoulée, soit après le début de l'injection d'air, soit après la fin d'injection d'air. Cette étape remplace l'étape 105 de comparaison de la mesure de durée à une durée de référence.

Le procédé de vérification comprend alors l'émission d'un signal représentatif d'un défaut d'étanchéité de l'étrier 1, lorsque l'écart en valeur absolue entre la mesure de valeur représentative de pression et la valeur de référence excède une valeur seuil.

Le conduit 4 et le système de contrôle d'étanchéité 6 sont utilisés pour vérifier l'étanchéité de l'étrier 1. Ils peuvent notamment être utilisés pour vérifier l'étanchéité de l'actionneur 3 seul, par exemple lorsque la surface de montage 51 est fermée.

Le dispositif d'injection 61 est configuré pour injecter de l'air mais il peut injecter d'autres types de fluide, tel que de l'azote ou un gaz inerte. Le fluide injecté peut également être un liquide, par exemple de l'huile diélectrique, sous réserve qu'il ne détériore pas l'étrier 1 ou le moteur électrique 32.

Lorsque le fluide injecté est un fluide autre que de l'air, le dispositif d'injection de fluide 61 comporte de préférence une réserve de fluide, par exemple sous pression. Dans ce cas, le dispositif d'injection de fluide 61 peut être dépourvu de pompe.

Le dispositif d'injection d'air 61 peut aussi être remplacé par un dispositif d'aspiration d'air, destiné à aspirer de l'air du conduit 4, pour vérifier l'étanchéité de l'étrier 1. Dans ce cas, le manomètre 62 est utilisé pour mesurer une dépression.

En variante, le dispositif d'injection 61 peut être situé à proximité de la surface de montage 51, de manière à injecter/aspirer de l'air à proximité de la surface de montage 51 pour contrôler l'étanchéité de l'étrier 1.

Le manomètre 62 peut être situé aussi bien au niveau du connecteur électrique 34, qu'à proximité de la surface extérieure de montage 51. Le manomètre 62 peut être situé à proximité du dispositif d'injection 61, ou à son opposé par rapport à l'espace de circulation d'air formé par le conduit 4 et l'espace interne 33.

Lorsque le manomètre 62 est situé à proximité de la surface extérieure de montage 51, il est par exemple utilisé pour détecter une augmentation de pression, qui serait provoquée par une fuite à cet endroit, lorsque de l'air sous pression est injecté dans le conduit 4 à travers le connecteur électrique 34.

L'étrier 1 pourrait également être dépourvu de joint 5 entre la surface de montage 51 et le carter d'entrée 21.

L'étrier 1 peut notamment être configuré pour assurer le freinage de la roue, lorsque le véhicule avance à vive allure. L'étrier 1 peut être un étrier fixe.

Il est bien entendu que la mise en œuvre d'un frein mixte hydraulique électrique ne sort pas du cadre de la présente invention. Avantageusement, le freinage de service est assuré par des moyens hydraulique de type connu alors que le freinage de parking et/ou de secours est assuré par un moteur électrique.

### NOMENCLATURE EN REFERENCE AUX FIGURES

1 : étrier de frein
2 : corps d'étrier
3 : actionneur électromécanique
4 : conduit
5 : joint d'étanchéité
6 : système de contrôle d'étanchéité
7 : dispositif de transmission
11 : disque de frein
12 : piston
21 : carter d'entrée
31 : carter extérieur
32 : moteur
33 : espace Interne
34 : connecteur électrique
41 : câble électrique
51 : surface extérieure de montage
61 : dispositif d'injection d'air
62 : manomètre
64 : unité de traitement informatique
65 : dispositif d'alerte
71: premier train d'engrenages
72 : deuxième train d'engrenages
73 : troisième train d'engrenages
81 : batterie
82 : câble électrique
84 : connecteur électrique femelle
101 : étape de connexion du conduit au dispositif de variation de pression
102 : étape de mesure de pression
103 : étape de mesure de la durée nécessaire pour que la mesure de pression atteigne une valeur déterminée
105 : étape de comparaison de la mesure de durée à une durée de référence
107 : flèche
109 : flèche
111 : étape de signalement d'un défaut d'étanchéité
113 : étape de signalement d'absence de défaut d'étanchéité

## Revendications

1. Actionneur (3) électromécanique de frein pour véhicule, comprenant :
un moteur (32),
un carter (31) délimitant un espace interne (33) renfermant le moteur (32),
un connecteur électrique (34) débouchant sur l'extérieur de l'actionneur (3),
**caractérisé en ce qu'**il comprend un conduit (4) ménagé dans une paroi du carter (31), dans lequel est situé un conducteur électrique (41) qui relie électriquement le moteur (32) au connecteur électrique (34),
le conduit (4) étant configuré pour laisser circuler du fluide dans un espace délimité par le conducteur électrique (41) et par la paroi du carter (31), à travers le connecteur électrique (34) et entre le connecteur électrique (34) et l'espace interne (33).

2. Actionneur (3) selon la revendication précédente, dans lequel le connecteur électrique (34) est configuré pour être raccordé à un connecteur électrique complémentaire (84), en étant étanche au fluide lorsqu'il est raccordé au connecteur électrique complémentaire (84).

3. Étrier de frein (1) comprenant :
un corps d'étrier (2), et
un actionneur (3) selon l'une des revendications précédentes, le carter (31) comprenant une surface de montage pour accoupler de manière étanche l'actionneur (3) au corps d'étrier (2).

4. Étrier de frein (1) selon la revendication précédente, dans lequel le corps d'étrier (2) est un corps d'étrier flottant.

5. Étrier de frein (1) selon l'une des revendications 3 et 4, comprenant un joint (5) entre l'actionneur (3) et le corps d'étrier (2), le conduit (4) étant configuré pour tester l'étanchéité au fluide entre l'actionneur (3) et le corps d'étrier (2).

6. Procédé de vérification de l'étanchéité d'un étrier de frein (1) selon l'une quelconque des revendications 3 à 5, comprenant :
une étape (101) de connexion du conduit (4) à un dispositif de variation de pression (61), pour faire varier la pression de fluide dans l'étrier (1), le fluide étant de préférence de l'air.

7. Procédé de vérification de l'étanchéité selon la revendication précédente, comprenant ensuite :
une étape (102) de mesure de valeur représentative de pression de fluide au niveau du connecteur électrique (34) et/ou de la surface de montage.

8. Procédé de vérification de l'étanchéité selon l'une des revendications 6 et 7, comprenant :
une étape (103) de mesure de la durée nécessaire pour que la valeur représentative de pression atteigne une valeur de pression déterminée,
une étape (105) de comparaison de la mesure de durée à une durée de référence, et
l'émission (111) d'un signal représentatif d'un défaut d'étanchéité de l'étrier (1) si la valeur absolue de l'écart entre la mesure de durée et la durée de référence excède une valeur seuil.

## Patentansprüche

1. Elektromechanischer Aktuator (3) einer Bremse für Fahrzeuge, enthaltend:
einen Motor (32),
ein Gehäuse (31), das einen Innenraum (33) definiert, der den Motor (32) umschließt,
einen elektrischen Verbinder (34), der nach außerhalb des Aktuators (3) mündet,
**dadurch gekennzeichnet, dass**
er eine in einer Wand des Gehäuses (31) ausgeführte Leitung (4) enthält, in der sich ein elektrischer Leiter (41) befindet, der den Motor (32) elektrisch mit dem elektrischen Verbinder (34) verbindet,
wobei die Leitung (4) dazu ausgelegt ist, um ein Fluid in einem durch den elektrischen Verbinder (41) und die Wand des Gehäuses (31) begrenzten Raum durch den elektrischen Verbinder (34) und zwischen dem elektrischen Verbinder (34) und dem Innenraum (33) hindurch fließen zu lassen.

2. Aktuator (3) nach dem vorangehenden Anspruch,
wobei
der elektrische Verbinder (34) dazu ausgelegt ist, um mit einem komplementären elektrischen Verbinder (84) verbunden zu werden und dabei fluiddicht zu sein, wenn er an den komplementären elektrischen Verbinder (84) angeschlossen ist.

3. Bremssattel (1), enthaltend:
einen Sattelkörper (2) und
einen Aktuator (3) nach einem der vorangehenden Ansprüche,
wobei das Gehäuse (31) eine Montagefläche zum dichten Ankoppeln des Aktuators (3) an den Sattel körper (2) enthält.

4. Bremssattel (1) nach dem vorangehenden Anspruch,
wobei
der Sattelkörper (2) ein schwimmender Sattelkörper ist.

5. Bremssattel (1) nach einem der Ansprüche 3 und 4, enthaltend
eine Dichtung (5) zwischen dem Aktuator (3) und dem Sattelkörper (2), wobei die Leitung (4) dazu ausgelegt ist, um die Fluiddichtheit zwischen dem Aktuator (3) und dem Sattelkörper (2) zu prüfen.

6. Verfahren zum Überprüfen der Dichtheit eines Bremssattels (1) nach einem der Ansprüche 3 bis 5, umfassend
einen Schritt (101) des Verbindens der Leitung (4) mit einer Druckänderungsvorrichtung (61), um den Fluiddruck in dem Sattel (1) zu verändern, wobei das Fluid vorzugsweise Luft ist.

7. Verfahren zum Überprüfen der Dichtheit nach dem vorangehenden Anspruch, ferner umfassend:
einen Schritt (102) des Messens eines für den Fluiddruck repräsentativen Wertes im Bereich des elektrischen Verbinders (34) und/oder der Montagefläche.

8. Verfahren zum Überprüfen der Dichtheit nach einem der Ansprüche 6 und 7, umfassend:
einen Schritt (103) des Messens der Zeit, die benötigt wird, bis der für den Druck repräsentative Wert einen bestimmten Druckwert erreicht,
einen Schritt (105) des Vergleichens der Zeitmessung mit einer Referenzzeit und
das Ausgeben (111) eines Signals, das für eine Undichtheit des Sattels (1) repräsentativ ist, wenn der Absolutwert der Differenz zwischen der Zeitmessung und der Referenzzeit einen Schwellenwert überschreitet.

## Claims

1. An electromechanical brake actuator (3) for a vehicle, comprising:
a motor (32),
a casing (31) delimiting an inner space (33) enclosing the motor (32),
an electric connector (34) opening outwardly of the actuator (3),
**characterised in that** it comprises a duct (4) provided in a wall of the casing (31), wherein an electric conductor (41) is located in the duct (4), wherein the electric conductor (41) electrically connects the motor (32) to the electric connector (34),
wherein the duct (4) is configured to allow fluid to circulate in a space delimited by the electric conductor (41) and by the wall of the casing (31), through the electric connector (34) and between the electric connector (34) and the inner space (33).

2. The actuator (3) according to the preceding claim, wherein the electric connector (34) is configured to be connected to a complementary electric connector (84), wherein the electric connector (34) is configured to be fluid tight when connected to the complementary electric connector (84).

3. A brake caliper (1) comprising:
a caliper body (2), and
an actuator (3) according to one of the preceding claims, wherein the casing (31) comprises a mounting surface to tightly couple the actuator (3) to the caliper body (2).

4. The brake caliper (1) according to the preceding claim, wherein the caliper body (2) is a floating caliper body.

5. The brake caliper (1) according to one of claims 3 and 4, comprising a seal (5) between the actuator (3) and the caliper body (2), wherein the duct (4) is configured to test fluid tightness between the actuator (3) and the caliper body (2).

6. A method for checking tightness of a brake caliper (1) according to any of claims 3 to 5, comprising:
a step (101) of connecting the duct (4) to a pressure varying device (61), for varying the fluid pressure in the caliper (1), wherein the fluid is preferably air.

7. The method for checking tightness according to the preceding claim, then comprising:
a step (102) of measuring a value representative of the fluid pressure at the electric connector (34) and/or at the mounting surface.

8. The method for checking tightness according to one of claims 6 and 7, comprising:
a step (103) of measuring the duration necessary for the value representative of the pressure to reach a determined pressure value,
a step (105) of comparing the duration measurement to a reference duration, and
emitting (111) a signal representative of a tightness fault of the caliper (1) if the absolute value of the deviation between the duration measurement and the reference duration exceeds a threshold value.
